# FASCICULE DE BREVET EUROPEEN

(11) **EP 3 687 354 B1**
(45) Date de publication et mention de la délivrance du brevet: **18.08.2021**
(21) Numéro de dépôt: 18793242.1
(22) Date de dépôt: 24.09.2018
(51) Int. Cl.: A47J 43/07

(54) **APPAREIL ÉLECTROMÉNAGER DE PRÉPARATION CULINAIRE CHAUFFANT COMPORTANT UN DISPOSITIF DE SÉCURITÉ**
HAUSHALTSGERÄTE FÜR DIE BEHEIZTE VORBEREITUNG VON NAHRUNGSMITTELN MIT EINER SICHERHEITSANORDNUNG
HOUSEHOLD APPARATUS FOR THE HEATED PREPARATION OF FOOD COMPRISING A SAFETY ARRANGEMENT

(30) Priorité: 29.09.2017 FR 1759140
(43) Date de publication de la demande: 05.08.2020
(73) Titulaire: SEB S.A., 69130 Ecully (FR)
(72) Inventeur: GERARD, Emmanuel, 61410 Couterne (FR); NESPOUX, Johan, 53640 Le Horps (FR); HAMELIN, Franck, 50490 Saint-Sauveur-Lendelin (FR)
(74) Mandataire: SEB Développement
(86) Numéro de dépôt international: PCT/FR2018/052340
(87) Numéro de publication internationale: WO 2019/063924

(56) Documents cités:
- WO-A1-2006/070980
- FR-A1- 2 995 774
- US-A- 4 174 073
- US-A1- 2013 075 505

## Description

La présente invention concerne le domaine technique des appareils électroménagers de préparation culinaire chauffants.

La présente invention concerne plus particulièrement les appareils électroménagers de préparation culinaire chauffants comportant une base motorisée, un récipient de travail disposé sur la base motorisée, un outil de travail rotatif disposé dans le récipient de travail, un couvercle pouvant occuper une position fermée sur le récipient de travail.

Il est connu de réaliser des appareils électroménagers de préparation culinaire du type précité comportant un dispositif de sécurité interdisant le fonctionnement de l'appareil si le couvercle n'occupe pas la position fermée sur le récipient de travail. Cette disposition permet de réaliser un appareil électroménager de préparation culinaire présentant un fonctionnement sûr, le couvercle interdisant un accès à l'outil de travail rotatif entraîné en rotation dans le récipient de travail.

Toutefois dans le cas des appareils électroménagers de préparation culinaire chauffants du type précité, l'interdiction du fonctionnement de l'appareil conduit également à l'interruption de la chauffe de l'appareil lorsque le couvercle n'occupe pas la position fermée sur le récipient de travail. Pour remuer les aliments manuellement dans le récipient de travail, ou pour ajouter des aliments dans le récipient de travail, il peut être nécessaire de retirer le couvercle. Le fonctionnement de l'appareil est alors interrompu. Pour poursuivre la chauffe de l'appareil il est alors nécessaire de remettre en place le couvercle. De telles manipulations peuvent s'avérer fastidieuses.

Le document FR 2 995 774 divulgue un appareil électroménager de préparation culinaire chauffant selon les caractéristiques du préambule de la revendication 1.

Le document US 4 174 073 propose un robot culinaire comportant un premier récipient fonctionnant avec un couvercle fermé, et un deuxième récipient fonctionnant sans couvercle.

Un objet de la présente invention est de proposer un appareil électroménager de préparation culinaire chauffant du type précité, dans lequel les manipulations de l'appareil lors de son utilisation puissent être moins contraignantes.

Un autre objet de la présente invention est de proposer un appareil électroménager de préparation culinaire chauffant du type précité, dans lequel une plus grande variété de préparations peut être envisagée.

Ces objets sont atteints avec un appareil électroménager de préparation culinaire chauffant selon la revendication 1.

En d'autres termes, les niveaux de température prédéterminés comprennent un ou plusieurs niveau(x) de température prédéterminé(s) prévu(s) pour l'utilisation de l'appareil électroménager de préparation culinaire chauffant sans que le couvercle n'occupe nécessairement la position fermée sur le récipient de travail, pour le(s)quel(s) le dispositif de sécurité autorise l'alimentation du dispositif de chauffage électrique si le couvercle n'occupe pas la position fermée sur le récipient de travail.

Ainsi au moins pour certains niveaux de température prédéterminés, le dispositif de chauffage électrique peut continuer à être alimenté même si le couvercle n'est pas en place sur le récipient de travail ou si le couvercle est retiré du récipient de travail au cours du fonctionnement de l'appareil. L'appareil électroménager de préparation culinaire chauffant permet ainsi de réaliser une plus grande variété de préparations avec une plus grande facilité, notamment des préparations ne nécessitant pas l'utilisation d'un outil de travail rotatif. Un remuage manuel des aliments peut notamment être envisagé lors d'une opération de cuisson utilisant un desdits niveaux de température prédéterminés.

Selon un mode de réalisation, les niveaux de température prédéterminés comprennent uniquement le ou les premier(s) niveau(x) de température prédéterminé(s).

En d'autres termes, les niveaux de température prédéterminés comprennent uniquement le ou les niveau(x) de température prédéterminé(s) prévu(s) pour l'utilisation de l'appareil électroménager de préparation culinaire chauffant sans que le couvercle n'occupe nécessairement la position fermée sur le récipient de travail.

Ainsi l'appareil peut être utilisé pour chauffer ou cuire les aliments sans utiliser de couvercle, quel que soit le niveau de température utilisé.

Selon un autre mode de réalisation, les niveaux de température prédéterminés comprennent un ou plusieurs deuxième(s) niveau(x) de température prédéterminé(s) pour le(s)quel(s) le dispositif de sécurité interdit l'alimentation du dispositif de chauffage électrique si le couvercle n'occupe pas la position fermée sur le récipient de travail.

En d'autres termes, les niveaux de température prédéterminés comprennent un ou plusieurs niveau(x) de température prédéterminé(s) prévu(s) pour l'utilisation de l'appareil électroménager de préparation culinaire chauffant avec le couvercle occupant la position fermée sur le récipient de travail, pour le(s)quel(s) le dispositif de sécurité interdit l'alimentation du dispositif de chauffage électrique si le couvercle n'occupe pas la position fermée sur le récipient de travail.

Ainsi l'appareil peut être utilisé pour chauffer ou cuire les aliments sans utiliser de couvercle seulement pour un niveau de température ou pour certains niveaux de température.

Avantageusement alors, le ou les premier(s) niveau(x) de température prédéterminé(s) est/sont supérieurs au(x) deuxième(s) niveau(x) de température prédéterminé(s).

En d'autres termes, le ou les niveau(x) de température prédéterminé(s) prévu(s) pour l'utilisation de l'appareil électroménager de préparation culinaire chauffant sans que le couvercle n'occupe nécessairement la position fermée sur le récipient de travail est/sont supérieurs au(x) niveau(x) de température prédéterminé(s) prévu(s) pour l'utilisation de l'appareil électroménager de préparation culinaire chauffant avec le couvercle occupant la position fermée sur le récipient de travail.

La cuisson réalisée couvercle ouvert présente un intérêt notamment pour les températures les plus élevées, pour bien contrôler l'évolution de la cuisson de l'aliment.

Avantageusement encore, le ou au moins l'un des premier(s) niveau(x) de température prédéterminé(s) est supérieur à 100°C.

En d'autres termes, le ou au moins l'un des niveau(x) de température prédéterminé(s) prévu(s) pour l'utilisation de l'appareil électroménager de préparation culinaire chauffant sans que le couvercle n'occupe nécessairement la position fermée sur le récipient de travail est supérieur à 100°C.

De tels niveaux de températures prédéterminés permettent de faciliter l'évaporation de l'eau contenue dans les aliments.

Avantageusement encore le ou les premier(s) niveau(x) de température prédéterminé(s) est/sont supérieur(s) à 100°C.

En d'autres termes, le ou les niveau(x) de température prédéterminé(s) prévu(s) pour l'utilisation de l'appareil électroménager de préparation culinaire chauffant sans que le couvercle n'occupe nécessairement la position fermée sur le récipient de travail est/sont supérieur(s) à 100°C.

Avantageusement encore, le ou au moins l'un des premier(s) niveau(x) de température prédéterminé(s) est supérieur à 130°C.

En d'autres termes, le ou au moins l'un des niveau(x) de température prédéterminé(s) prévu(s) pour l'utilisation de l'appareil électroménager de préparation culinaire chauffant sans que le couvercle n'occupe nécessairement la position fermée sur le récipient de travail est supérieur à 130°C.

De tels niveaux de températures prédéterminés permettent de faciliter le rissolage des aliments.

Avantageusement encore, le ou les premier(s) niveau(x) de température prédéterminé(s) est/sont supérieur(s) à 130°C.

En d'autres termes, le ou les niveau(x) de température prédéterminé(s) prévu(s) pour l'utilisation de l'appareil électroménager de préparation culinaire chauffant sans que le couvercle n'occupe nécessairement la position fermée sur le récipient de travail est/sont supérieur(s) à 130°C.

Avantageusement encore, le ou les premier(s) niveau(x) de température prédéterminé(s) est/sont inférieur(s) ou égal/égaux à 180°C.

En d'autres termes, le ou les niveau(x) de température prédéterminé(s) prévu(s) pour l'utilisation de l'appareil électroménager de préparation culinaire chauffant sans que le couvercle n'occupe nécessairement la position fermée sur le récipient de travail est/sont inférieur(s) ou égal/égaux à 180°C. Avantageusement encore, le ou les premier(s) niveau(x) de température prédéterminé(s) est/sont inférieur(s) ou égal/égaux à 150°C.

En d'autres termes, le ou les niveau(x) de température prédéterminé(s) prévu(s) pour l'utilisation de l'appareil électroménager de préparation culinaire chauffant sans que le couvercle n'occupe nécessairement la position fermée sur le récipient de travail est/sont inférieur(s) ou égal/égaux à 150°C. Avantageusement encore, le ou au moins l'un des premier(s) niveau(x) de température prédéterminé(s) est supérieur à 100°C, et le ou les premier(s) niveau(x) de température prédéterminé(s) est/sont inférieur(s) ou égal/égaux à 180°C.

Avantageusement encore, le ou au moins l'un des premier(s) niveau(x) de température prédéterminé(s) est supérieur à 100°C, et le ou les premier(s) niveau(x) de température prédéterminé(s) est/sont inférieur(s) ou égal/égaux à 150°C.

Avantageusement encore le ou les premier(s) niveau(x) de température prédéterminé(s) est/sont supérieur(s) à 100°C, et le ou les premier(s) niveau(x) de température prédéterminé(s) est/sont inférieur(s) ou égal/égaux à 180°C. Avantageusement encore le ou les premier(s) niveau(x) de température prédéterminé(s) est/sont supérieur(s) à 100°C, et le ou les premier(s) niveau(x) de température prédéterminé(s) est/sont inférieur(s) ou égal/égaux à 150°C. Avantageusement encore, le ou au moins l'un des premier(s) niveau(x) de température prédéterminé(s) est supérieur à 130°C, et le ou les premier(s) niveau(x) de température prédéterminé(s) est/sont inférieur(s) ou égal/égaux à 180°C.

Avantageusement encore, le ou au moins l'un des premier(s) niveau(x) de température prédéterminé(s) est supérieur à 130°C, et le ou les premier(s) niveau(x) de température prédéterminé(s) est/sont inférieur(s) ou égal/égaux à 150°C.

Avantageusement encore, le ou les premier(s) niveau(x) de température prédéterminé(s) est/sont supérieur(s) à 130°C, et le ou les premier(s) niveau(x) de température prédéterminé(s) est/sont inférieur(s) ou égal/égaux à 180°C. Avantageusement encore, le ou les premier(s) niveau(x) de température prédéterminé(s) est/sont supérieur(s) à 130°C, et le ou les premier(s) niveau(x) de température prédéterminé(s) est/sont inférieur(s) ou égal/égaux à 150°C.

Selon une forme de réalisation, le dispositif de chauffage électrique est solidaire du récipient de travail. En alternative, le dispositif de chauffage électrique pourrait notamment être agencé dans la base motorisée.

Selon une forme de réalisation, le récipient de travail est monté amovible sur la base motorisée. En alternative, le récipient de travail pourrait être issu de la base motorisée.

Selon une forme de réalisation, le couvercle est verrouillé par baïonnette sur le récipient de travail. En alternative, le couvercle occupant la position fermée sur le récipient de travail pourrait notamment venir en prise avec la base motorisée.

L'invention sera mieux comprise à l'étude d'un exemple de réalisation, pris à titre nullement limitatif, illustré dans les figures annexées, dans lesquelles :
- la figure 1 est une vue en perspective assemblée d'un exemple de réalisation d'un appareil électroménager de préparation culinaire chauffant selon l'invention,
- la figure 2 est une vue schématique du dispositif de sécurité de l'appareil électroménager de préparation culinaire chauffant illustré sur la figure 1, ce dispositif de sécurité commandant le fonctionnement d'un moteur électrique et d'un dispositif de chauffage électrique.

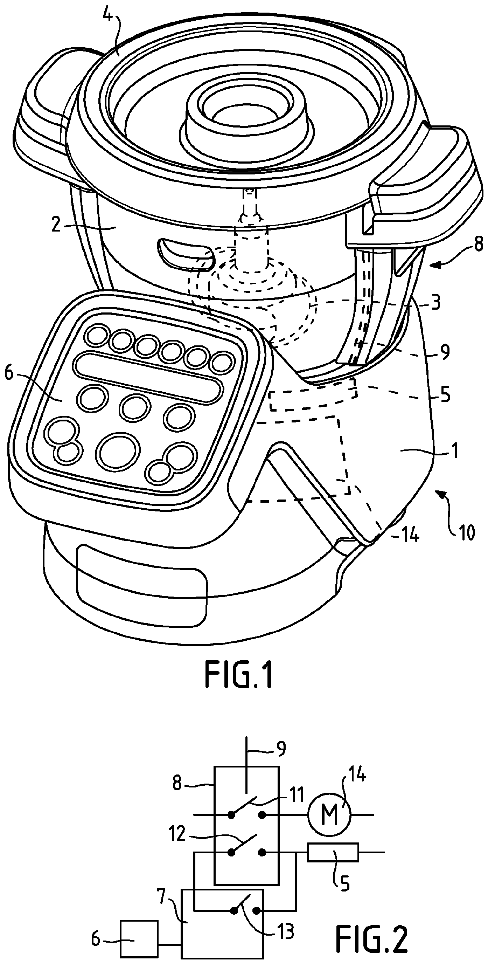

L'appareil électroménager de préparation culinaire chauffant 10 illustré sur la figure 1 comporte une base motorisée 1, un récipient de travail 2, un outil de travail rotatif 3 et un couvercle 4. La base motorisée 1 comprend un moteur électrique 14, représenté schématiquement sur les figures 1 et 2. Le moteur électrique 14 entraîne une sortie d'entraînement, non représentée. Le récipient de travail 2 est disposé sur la base motorisée 1. Plus particulièrement, le récipient de travail 2 est monté amovible sur la base motorisée 1. L'outil de travail rotatif 3 est disposé dans le récipient de travail 2 pour être entraîné en rotation par la sortie d'entraînement, si désiré par l'intermédiaire d'un organe de transmission monté rotatif dans le fond du récipient de travail 2. Le couvercle 4 peut occuper une position fermée sur le récipient de travail 2, représentée sur la figure 1. Si désiré, le couvercle 4 peut être amovible par rapport au récipient de travail 2.

L'appareil électroménager de préparation culinaire chauffant 10 comporte un dispositif de chauffage électrique 5 (représenté de manière schématique sur les figures 1 et 2). Le dispositif de chauffage électrique 5 peut notamment être solidaire du récipient de travail 2, ou être monté dans la base motorisée 1.

L'appareil électroménager de préparation culinaire chauffant 10 comporte un dispositif de commande 6 (représenté de manière schématique sur les figures 1 et 2) pour sélectionner un niveau de température parmi plusieurs niveaux de température prédéterminés afin de piloter l'alimentation du dispositif de chauffage électrique 5.

L'appareil électroménager de préparation culinaire chauffant 10 comporte un dispositif de contrôle de température 7 (représenté de manière schématique sur la figure 2). Le dispositif de contrôle de température 7 utilise le niveau de température sélectionné pour contrôler l'alimentation du dispositif de chauffage électrique, par exemple pour réaliser une limitation de température ou une régulation de température. Le dispositif de contrôle de température 7 comprend un capteur de température (non représenté) pour évaluer la température du récipient de travail 2 ou des aliments contenus dans le récipient de travail 2. Le capteur de température peut notamment venir en contact avec le récipient de travail 2. Le dispositif de contrôle de température 7 comporte un microcontrôleur comportant plusieurs programmes de fonctionnement susceptibles d'être sélectionnés par le dispositif de commande 6. En alternative ou en complément, le dispositif de commande 6 peut comporter plusieurs touches ou boutons correspondant chacun à un niveau de température donné, et/ou permettant de sélectionner un niveau de température prédéterminé parmi plusieurs niveaux de température, formant ainsi un dispositif de contrôle de température 7.

Dans l'exemple de réalisation illustré sur les figures, les niveaux de température prédéterminés sont par exemple compris entre 30°C et 150°C. L'intervalle entre deux niveaux de température prédéterminés consécutifs est par exemple de 5°C. A titre de variante, les intervalles entre deux niveaux de température prédéterminés consécutifs ne sont pas nécessairement identiques. L'appareil électroménager de préparation culinaire chauffant 10 comporte un dispositif de sécurité 8, représenté de manière schématique sur les figures 1 et 2. Le dispositif de sécurité 8 interdit l'alimentation du moteur électrique 14 si le couvercle 4 n'occupe pas la position fermée sur le récipient de travail 2. Le dispositif de sécurité 8 peut notamment comporter un mécanisme de détection 9 (représenté schématiquement sur les figures 1 et 2). Le mécanisme de détection 9 est prévu pour détecter la présence du couvercle 4 occupant la position fermée sur le récipient de travail 2. Dans l'exemple de réalisation illustré sur la figure 1, le mécanisme de détection 9 est porté au moins en partie par le récipient de travail 2. Le mécanisme de détection 9 est prévu pour coopérer avec un premier interrupteur 11 monté en série avec le moteur électrique 14 et avec un deuxième interrupteur 12 monté en série avec le dispositif de chauffage électrique 5. Un troisième interrupteur électrique 13 est monté en parallèle avec le deuxième interrupteur électrique 12. Le troisième interrupteur électrique 13 est piloté par le dispositif de contrôle de température 7, si désiré par le microcontrôleur.

Selon l'invention, les niveaux de température prédéterminés comprennent un ou plusieurs niveau(x) de température prédéterminé(s) pour le(s)quel(s) le dispositif de sécurité 8 autorise l'alimentation du dispositif de chauffage électrique 5 si le couvercle 4 n'occupe pas la position fermée sur le récipient de travail 2.

En d'autres termes, les niveaux de température prédéterminés comprennent au moins un niveau de température prédéterminé pour lequel le dispositif de sécurité 8 autorise l'alimentation du dispositif de chauffage électrique 5 si le couvercle 4 n'occupe pas la position fermée sur le récipient de travail 2. Si désiré, les niveaux de température prédéterminés peuvent comprendre au moins un autre niveau de température prédéterminé pour lequel le dispositif de sécurité 8 autorise l'alimentation du dispositif de chauffage électrique 5 seulement si le couvercle 4 occupe pas la position fermée sur le récipient de travail 2.

Les niveaux de température prédéterminés comprennent ainsi des premiers niveaux de température prédéterminés prévus pour l'utilisation de l'appareil électroménager de préparation culinaire chauffant 10 avec le couvercle 4 occupant la position fermée sur le récipient de travail 2, ce qui correspond à une utilisation classique d'un appareil électroménager de préparation culinaire chauffant 10 dans lequel l'outil de travail rotatif 3 est coupant ou est susceptible d'être entraîné en rotation par le moteur électrique 14 agencé dans la base motorisée 1 à une vitesse de rotation suffisamment élevée pour créer un danger pour l'utilisateur, par exemple supérieure à 20 t/min. Dans l'exemple de réalisation illustré sur la figure 1, les premiers niveaux de température prédéterminés sont par exemple compris entre 30°C et 130°C.

Les niveaux de température prédéterminés comprennent aussi des deuxièmes niveaux de température prédéterminés prévus pour l'utilisation de l'appareil électroménager de préparation culinaire chauffant 10 sans que le couvercle 4 n'occupe nécessairement la position fermée sur le récipient de travail 2. Dans l'exemple de réalisation illustré sur la figure 1, les deuxièmes niveaux de température prédéterminés sont par exemple compris entre 135°C et 150°C.

L'appareil électroménager selon l'invention s'utilise et fonctionne de la manière suivante.

Lorsque l'utilisateur sélectionne un niveau de température parmi les premiers niveaux de température prédéterminés, le troisième interrupteur 13 est ouvert. Ainsi le dispositif de chauffage électrique 5 ne peut être alimenté que lorsque le deuxième interrupteur 12 est fermé. Le deuxième interrupteur 12 est fermé seulement si le couvercle 4 occupe la position fermée sur le récipient de travail 2. Le deuxième interrupteur 12 est ouvert si le couvercle 4 n'occupe pas la position fermée sur le récipient de travail 2.

Lorsque l'utilisateur sélectionne un niveau de température parmi les deuxièmes niveaux de température prédéterminés, le troisième interrupteur 13 est fermé. Le dispositif de chauffage électrique 5 peut ainsi être alimenté même si le couvercle 4 n'occupe pas la position fermée sur le récipient de travail 2. En fonction du niveau de température utilisé, le dispositif de sécurité 8 peut ainsi être partiellement débrayé pour autoriser l'alimentation du dispositif de chauffage électrique 5 alors que le couvercle 4 n'occupe pas la position fermée sur le récipient de travail 2.

Avec l'appareil électroménager de préparation culinaire chauffant 10, l'utilisateur peut ainsi réaliser un rissolage des aliments ou à une cuisson à la vapeur dans le récipient de travail 2 ouvert, sans utiliser le couvercle 4, tout en conservant des fonctions de remuage, de mélange, de broyage et de chauffe lorsque le récipient de travail 2 est fermé par le couvercle 4.

A titre de variante, le dispositif de sécurité 8 pourrait comporter deux sous-dispositifs de sécurité indépendants détectant chacun si le couvercle 4 occupe la position fermée sur le récipient de travail 2, l'un des sous-dispositifs de sécurité contrôlant l'alimentation du moteur électrique et l'autre contrôlant l'alimentation du dispositif de chauffage électrique. Chacun de ces sous-dispositifs de sécurité peut comporter un mécanisme de détection coopérant avec le couvercle.

La présente invention n'est nullement limitée à l'exemple de réalisation décrit et à ses variantes, mais englobe de nombreuses modifications dans le cadre des revendications.

## Revendications

1. Appareil électroménager de préparation culinaire chauffant (10) comportant une base motorisée (1) comprenant un moteur électrique (14) entraînant une sortie d'entraînement, un récipient de travail (2) disposé sur la base motorisée (1), un outil de travail rotatif (3) disposé dans le récipient de travail (2) pour être entraîné en rotation par la sortie d'entraînement, un couvercle (4) pouvant occuper une position fermée sur le récipient de travail (2), un dispositif de chauffage électrique (5) pour chauffer le récipient de travail (2), un dispositif de commande (6) pour sélectionner un niveau de température parmi plusieurs niveaux de température prédéterminés, un dispositif de contrôle de température (7) utilisant le niveau de température sélectionné pour contrôler l'alimentation du dispositif de chauffage électrique (5), un dispositif de sécurité (8) interdisant l'alimentation du moteur électrique (14) si le couvercle (4) n'occupe pas la position fermée sur le récipient de travail (2), **caractérisé en ce que** les niveaux de température prédéterminés comprennent un ou plusieurs niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2), pour le(s)quel(s) le dispositif de sécurité (8) autorise l'alimentation du dispositif de chauffage électrique (5) si le couvercle (4) n'occupe pas la position fermée sur le récipient de travail (2).

2. Appareil électroménager de préparation culinaire chauffant (10) selon la revendication 1, **caractérisé en ce que** les niveaux de température prédéterminés comprennent uniquement le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2).

3. Appareil électroménager de préparation culinaire chauffant (10) selon la revendication 1, **caractérisé en ce que** les niveaux de température prédéterminés comprennent un ou plusieurs niveau(x) de température prédéterminé(s) prévu(s) pour l'utilisation de l'appareil électroménager de préparation culinaire chauffant (10) avec le couvercle (4) occupant la position fermée sur le récipient de travail (2), pour le(s)quel(s) le dispositif de sécurité (8) interdit l'alimentation du dispositif de chauffage électrique (5) si le couvercle (4) n'occupe pas la position fermée sur le récipient de travail (2).

4. Appareil électroménager de préparation culinaire chauffant (10) selon la revendication 3, **caractérisé en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont supérieurs au(x) niveau(x) de température prédéterminé(s) prévu(s) pour l'utilisation de l'appareil électroménager de préparation culinaire chauffant (10) avec le couvercle (4) occupant la position fermée sur le récipient de travail (2).

5. Appareil électroménager de préparation culinaire chauffant (10) selon l'une des revendications 1 à 4, **caractérisé en ce que** le ou au moins l'un des niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2), est supérieur à 100°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 180°C.

6. Appareil électroménager de préparation culinaire chauffant (10) selon l'une des revendications 1 à 4, **caractérisé en ce que** le ou au moins l'un des niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2), est supérieur à 100°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 150°C.

7. Appareil électroménager de préparation culinaire chauffant (10) selon l'une des revendications 1 à 4, **caractérisé en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont supérieur(s) à 100°C, **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 180°C.

8. Appareil électroménager de préparation culinaire chauffant (10) selon l'une des revendications 1 à 4, **caractérisé en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont supérieur(s) à 100°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 150°C.

9. Appareil électroménager de préparation culinaire chauffant (10) selon l'une des revendications 1 à 4, **caractérisé en ce que** le ou au moins l'un des niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est supérieur à 130°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 180°C.

10. Appareil électroménager de préparation culinaire chauffant (10) selon l'une des revendications 1 à 4, **caractérisé en ce que** le ou au moins l'un des niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est supérieur à 130°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 150°C.

11. Appareil électroménager de préparation culinaire chauffant (10) selon l'une des revendications 1 à 4, **caractérisé en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont supérieur(s) à 130°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 180°C.

12. Appareil électroménager de préparation culinaire chauffant (10) selon l'une des revendications 1 à 4, **caractérisé en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont supérieur(s) à 130°C, et **en ce que** le ou les niveau(x) de température prédéterminé(s) prévu(s) pour l'utilisation de l'appareil électroménager de préparation culinaire chauffant (10) sans que le couvercle (4) n'occupe nécessairement la position fermée sur le récipient de travail (2) est/sont inférieur(s) ou égal/égaux à 150°C.

## Patentansprüche

1. Heizendes Elektrohaushaltsgerät zur Nahrungsmittelzubereitung (10), das eine motorisierte Basis (1) umfasst, die einen Elektromotor (14) umfasst, der einen Antriebsausgang antreibt, einen Arbeitsbehälter (2), der auf der motorisierten Basis (1) angeordnet ist, ein Dreharbeitswerkzeug (3), das in dem Arbeitsbehälter (2) angeordnet ist, um in Drehung von dem Antriebsausgang angetrieben zu werden, einen Deckel (4), der eine geschlossene Position auf dem Arbeitsbehälter (2) einnehmen kann, eine elektrische Heizvorrichtung (5) zum Heizen des Arbeitsbehälters (2), eine Steuervorrichtung (6) zum Auswählen eines Temperaturniveaus aus mehreren vorbestimmten Temperaturniveaus, eine Temperatursteuervorrichtung (7), die das ausgewählte Temperaturniveau verwendet, um die Versorgung der elektrischen Heizvorrichtung (5) zu steuern, eine Sicherheitsvorrichtung (8), die die Versorgung des Elektromotors (14) untersagt, falls der Deckel (4) nicht die geschlossene Position auf dem Arbeitsbehälter (2) einnimmt, **dadurch gekennzeichnet, dass** die vorbestimmten Temperaturniveaus ein oder mehrere vorbestimmte Temperaturniveaus umfassen, das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, für das (die) die Sicherheitsvorrichtung (8) das Versorgen der elektrischen Heizvorrichtung (5) gestattet, falls der Deckel (4) nicht die geschlossene Position auf dem Arbeitsbehälter (2) einnimmt.

2. Heizendes Elektrohaushaltsgerät zur Nahrungsmittelzubereitung (10) nach Anspruch 1, **dadurch gekennzeichnet, dass** die vorbestimmten Temperaturniveaus nur das oder die vorbestimmte(n) Temperaturniveau(s) umfasst (umfassen), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt.

3. Heizendes Elektrohaushaltsgerät zur Nahrungsmittelzubereitung (10) nach Anspruch 1, **dadurch gekennzeichnet, dass** die vorbestimmte(n) Temperaturniveaus ein oder mehrere vorbestimmte Temperaturniveau(s) umfassen, das (die) für die Verwendung des heizenden Elektrohaushaltsgeräts zur Nahrungsmittelzubereitung (10) mit dem Deckel (4), der die geschlossene Position auf dem Arbeitsbehälter (2) einnimmt, vorgesehen ist (sind), für das (die) die Sicherheitsvorrichtung (8) die Versorgung der elektrischen Heizvorrichtung (5) untersagt, falls der Deckel (4) nicht die geschlossene Position auf dem Arbeitsbehälter (2) einnimmt.

4. Heizendes Elektrohaushaltsgerät zur Nahrungsmittelzubereitung (10) nach Anspruch 3, **dadurch gekennzeichnet, dass** das (die) vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als das (die) vorbestimmte(n) Temperaturniveau(s), das (die) für die Verwendung des heizenden Elektrohaushaltsgeräts zur Nahrungsmittelzubereitung (10) mit dem Deckel (4), der die geschlossene Position auf dem Arbeitsbehälter (2) einnimmt, vorgesehen ist (sind).

5. Heizendes Elektrohaushaltsgerät zur Nahrungsmittelzubereitung (10) nach einem der Ansprüche 1 bis 4, **dadurch gekennzeichnet, dass** das oder mindestens eines der vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 100 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 180 °C ist (sind).

6. Heizendes Elektrohaushaltsgerät zur Nahrungsmittelzubereitung (10) nach einem der Ansprüche 1 bis 4, **dadurch gekennzeichnet, dass** das oder mindestens eines der vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 100 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 150 °C ist (sind).

7. Heizendes Elektrohaushaltsgerät zur Nahrungsmittelzubereitung (10) nach einem der Ansprüche 1 bis 4, **dadurch gekennzeichnet, dass** das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 100 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 180 °C ist (sind).

8. Heizendes Elektrohaushaltsgerät zur Nahrungsmittelzubereitung (10) nach einem der Ansprüche 1 bis 4, **dadurch gekennzeichnet, dass** das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 100 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 150 °C ist (sind).

9. Heizendes Elektrohaushaltsgerät zur Nahrungsmittelzubereitung (10) nach einem der Ansprüche 1 bis 4, **dadurch gekennzeichnet, dass** das oder mindestens eines der vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 130 °C, und dass das (die) vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 180 °C ist (sind).

10. Heizendes Elektrohaushaltsgerät zur Nahrungsmittelzubereitung (10) nach einem der Ansprüche 1 bis 4, **dadurch gekennzeichnet, dass** das oder mindestens eines der vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 130 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 150 °C ist (sind).

11. Heizendes Elektrohaushaltsgerät zur Nahrungsmittelzubereitung (10) nach einem der Ansprüche 1 bis 4, **dadurch gekennzeichnet, dass** das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 130 °C, und dass das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, kleiner oder gleich 180 °C ist (sind).

12. Heizendes Elektrohaushaltsgerät zur Nahrungsmittelzubereitung (10) nach einem der Ansprüche 1 bis 4, **dadurch gekennzeichnet, dass** das oder die vorbestimmte(n) Temperaturniveau(s), das (die) für die Verwendung des heizenden Elektrohaushaltsgeräts zur Nahrungsmittelzubereitung (10) vorgesehen ist (sind), ohne dass der Deckel (4) notwendigerweise die geschlossene Position auf dem Arbeitsbehälter (2) einnimmt, höher ist (sind) als 130 °C, und dass das oder die vorbestimmte(n) Temperaturniveau(s), das (die) für die Verwendung des heizenden Elektrohaushaltsgeräts zur Nahrungsmittelzubereitung (10), ohne dass der Deckel (4) notwendigerweise die geschlossene Position auf dem Arbeitsbehälter (2) einnimmt, kleiner oder gleich 150 °C ist (sind).

## Claims

1. Heating household appliance (10) for food preparation comprising a motorised base (1) that comprises an electric motor (14) driving a drive outlet, a processing vessel (2) disposed on the motorised base (1), a rotary processing tool (3) disposed in the processing vessel (2) to be rotated by the drive outlet, a cover (4) able to occupy a closed position on the processing vessel (2), an electric heating device (5) for heating the processing vessel (2), a control device (6) for selecting a temperature level from a plurality of predetermined temperature levels, a temperature control device (7) using the selected temperature level to control the power supply of the electric heating device (5), a safety device (8) blocking the power supply of the electric motor (14) if the cover (4) does not occupy the closed position on the processing vessel (2), **characterised in that** the predetermined temperature levels comprise one or more predetermined temperature level(s) provided for the use of the heating household appliance (10) for food preparation without the cover (4) necessarily occupying the closed position on the processing vessel (2), for which the safety device (8) allows power to be supplied to the electric heating device (5) if the cover (4) does not occupy the closed position on the processing vessel (2).

2. Heating household appliance (10) for food preparation according to claim 1, **characterised in that** the predetermined temperature levels only comprise the predetermined temperature level(s) provided for the use of the heating household appliance (10) for food preparation, without the cover (4) necessarily occupying the closed position on the processing vessel (2).

3. Heating household appliance (10) for food preparation according to claim 1, **characterised in that** the predetermined temperature levels comprise one or more predetermined temperature level(s) provided for the use of the heating household appliance (10) for food preparation with the cover (4) occupying the closed position on the processing vessel (2), for which the safety device (8) blocks the power supply of the electric heating device (5) if the cover (4) does not occupy the closed position on the processing vessel (2).

4. Heating household appliance (10) for food preparation according to claim 3, **characterised in that** the predetermined temperature level(s) provided for the use of the heating household appliance (10) for food preparation without the cover (4) necessarily occupying the closed position on the processing vessel (2) is/are greater than the predetermined temperature level(s) provided for the use of the heating household appliance (10) for food preparation with the cover (4) occupying the closed position on the processing vessel (2).

5. Heating household appliance (10) for food preparation according to one of claims 1 to 4, **characterised in that** the or at least one of the predetermined temperature level(s) provided for the use of the heating household appliance (10) for food preparation without the cover (4) necessarily occupying the closed position on the processing vessel (2), is greater than 100°C, and **in that** the predetermined temperature level(s) provided for the use of the heating household appliance (10) for food preparation without the cover (4) necessarily occupying the closed position on the processing vessel (2) is/are less than or equal to 180°C.

6. Heating household appliance (10) for food preparation according to one of claims 1 to 4, **characterised in that** the or at least one of the predetermined temperature level(s) provided for the use of the heating household appliance (10) for food preparation, without the cover (4) necessarily occupying the closed position on the processing vessel (2), is greater than 100°C, and **in that** the predetermined temperature level(s) provided for the use of the heating household appliance (10) for food preparation, without the cover (4) necessarily occupying the closed position on the processing vessel (2) is/are less than or equal to 150°C.

7. Heating household appliance (10) for food preparation according to one of claims 1 to 4, **characterised in that** the predetermined temperature level(s) provided for the use of the heating household appliance (10) for food preparation, without the cover (4) necessarily occupying the closed position on the processing vessel (2) is/are greater than 100°C, **in that** the predetermined temperature level(s) provided for the use of the heating household appliance (10) for food preparation, without the cover (4) necessarily occupying the closed position on the processing vessel (2) is/are less than or equal to 180°C.

8. Heating household appliance (10) for food preparation according to one of claims 1 to 4, **characterised in that** the predetermined temperature level(s) provided for the use of the heating household appliance (10) for food preparation, without the cover (4) necessarily occupying the closed position on the processing vessel (2) is/are greater than 100°C, **in that** the predetermined temperature level(s) provided for the use of the heating household appliance (10) for food preparation, without the cover (4) necessarily occupying the closed position on the processing vessel (2) is/are less than or equal to 150°C.

9. Heating household appliance (10) for food preparation according to one of claims 1 to 4, **characterised in that** the or at least one of the predetermined temperature level(s) provided for the use of the heating household appliance (10) for food preparation, without the cover (4) necessarily occupying the closed position on the processing vessel (2) is greater than 130°C, and **in that** the predetermined temperature level(s) provided for the use of the heating household appliance (10) for food preparation, without the cover (4) necessarily occupying the closed position on the processing vessel (2) is/are less than or equal to 180°C.

10. Heating household appliance (10) for food preparation according to one of claims 1 to 4, **characterised in that** the or at least one of the predetermined temperature level(s) provided for the use of the heating household appliance (10) for food preparation, without the cover (4) necessarily occupying the closed position on the processing vessel (2) is greater than 130°C, and **in that** the predetermined temperature level(s) provided for the use of the heating household appliance (10) for food preparation, without the cover (4) necessarily occupying the closed position on the processing vessel (2) is/are less than or equal to 150°C.

11. Heating household appliance (10) for food preparation according to one of claims 1 to 4, **characterised in that** the predetermined temperature level(s) provided for the use of the heating household appliance (10) for food preparation, without the cover (4) necessarily occupying the closed position on the processing vessel (2) is/are greater than 130°C, and **in that** the predetermined temperature level(s) provided for the use of the heating household appliance (10) for food preparation, without the cover (4) necessarily occupying the closed position on the processing vessel (2) is/are less than or equal to 180°C.

12. Heating household appliance (10) for food preparation according to one of claims 1 to 4, **characterised in that** the predetermined temperature level(s) provided for the use of the heating household appliance (10) for food preparation, without the cover (4) necessarily occupying the closed position on the processing vessel (2) is/are greater than 130°C, and **in that** the predetermined temperature level(s) provided for the use of the heating household appliance (10) for food preparation, without the cover (4) necessarily occupying the closed position on the processing vessel (2) is/are less than or equal to 150°C.
